Europäisches Patentamt

European Patent Office

Office européen des brevets

(19)

(11) **EP 0 828 360 A1**

(12) **EUROPÄISCHE PATENTANMELDUNG**

(43) Veröffentlichungstag:
   **11.03.1998 Patentblatt 1998/11**

(51) Int. Cl.⁶: **H04B 15/04**

(21) Anmeldenummer: 96114131.4

(22) Anmeldetag: **04.09.1996**

(84) Benannte Vertragsstaaten:
   **DE FR GB IT NL**

(71) Anmelder:
   **Micronas Intermetall GmbH**
   **79108 Freiburg (DE)**

(72) Erfinder:
   **Menkhoff, Andreas, Dr.-Ing.**
   **79098 Freiburg (DE)**

(54) **Taktgenerator zur Erzeugung eines störstrahlarmen Systemtaktes**

(57)   Ein Taktgenerator (tg) dient zur Erzeugung eines im zeitlichen Mittel frequenzgenauen Systemtaktes (cl) für eine taktgesteuerte elektronische Einrichtung (5) wobei durch schaltungstechnische Maßnahmen der Systemtakt (cl) bezüglich benachbarter elektronischer Geräte (6) störstrahlarm ausgebildet ist. Hierzu wird der Systemtakt mittels eines Phasenmodulators (2) in Abhängigkeit von einer mittels einer Gewichtungseinrichtung (3.5; 35; 20; 25) im Rauschen gefärbten Zufallssignalquelle (3.1; 30) gegenüber einem Bezugstakt (b1) moduliert.

Fig.1

**Beschreibung**

Die Erfindung betrifft einen Taktgenerator zur Erzeugung eines im zeitlichen Mittel frequenzgenauen Systemtaktes für mindestens eine taktgesteuerte elektronische Einrichtung, insbesondere im Kraftfahrzeug. Bezüglich benachbarter, elektronischer Geräte sind der Systemtakt selbst und die resultierenden Stromspitzen störstrahlarm, da der Systemtakt mittels eines Phasenmodulators in Abhängigkeit von einer Zufallsignalquelle gegenüber einem Bezugstakt moduliert ist.

Die zunehmende Verwendung von digitalen, in der Regel taktgesteuerten Signalverarbeitungseinrichtungen in den verschiedensten Anwendungsbereichen, insbesondere auch in Kraftfahrzeugen, zur Anzeige, Steuerung oder Regelung unterschiedlichster Funktionen, bedingt ein zentrales oder dezentrales Taktsystem, an das die einzelnen taktgesteuerten Einrichtungen angeschlossen sind. Dadurch entstehen direkt oder über die angeschlossenen Versorgungs- oder Signalleitungen in einem großen Frequenzbereich Störsignale. Die Störsignale können sich dabei über elektrische oder elektromagnetische Störfelder und ein ungeschirmtes Versorgungsnetz auf benachbarte elektronische Einrichtungen oder Geräte ausbreiten und diese stören. Besonders unangenehm sind diese Störungen, wenn sie sich auf analoge Schaltungsteile oder analoge Signale auswirken. Im Kraftfahrzeug ist hiervon insbesondere der Audiobereich mit Radio-, Funk- oder Kassettenbetrieb betroffen, aber auch analoge Meßwertaufnehmer können gestört werden.

Die Ursache der Störungen sind die steilflankigen Stromspitzen in den taktgesteuerten Einrichtungen, die durch eine oder beide Taktflanken des Systemtaktes ausgelöst werden. Sie entstehen durch die Aktivierung einer Vielzahl von Schaltstufen, z.B. bei MOS-Schaltungen durch die Auf- oder Entladung der betroffenen Gate-Kapazitäten. Je höher dabei die Taktfrequenz ist, desto schneller müssen die internen Schaltvorgänge ablaufen. Dies wird durch eine niederohmige Schaltungsauslegung erreicht, aber je niederohmiger die Schaltung wird, desto größer werden die resultierenden Stromspitzen. Mit zunehmender Schaltungskomplexität nimmt die Anzahl der jeweils zu aktivierenden Schaltstufen und damit die Höhe der Stromspitzen weiter zu. Dies gilt insbesondere dann, wenn die zugehörigen taktgesteuerten Einrichtungen, z.B. Prozessoren, in CMOS-Technik realisiert sind. Die Pufferung der sehr schmalen Laststromspitzen durch externe Abblockkondensatoren ist aus Kostengründen und wegen der üblichen Gehäusebauarten für die integrierten Schaltungen nur unvollkommen möglich. Es lassen sich dabei kaum die hochfrequenten Anteile der Störsignale unterdrücken.

Aus dem Stand der Technik sind einige Verfahren bekannt, wie ein Taktsystem modifiziert werden kann, um die Störwirkungen auf benachbarte elektronische Geräte zu reduzieren. Maßnahmen, die der passiven Abschirmung oder der Verflachung der Flanken unnötig steiler Stromspitzen zuzurechnen sind, sind nicht Gegenstand der Erfindung, können jedoch auf vorteilhafte Weise mit ihr kombiniert werden und eine weitere Unterdrückung der Störwirkung bewirken. Die gattungsgemäße Erfindung betrifft eine zufallsgesteuerte Phasenmodulation des Systemtaktes, die den Energieinhalt des Störsignals auf einen möglichst großen Frequenzbereich möglichst fein verteilt. Im zeitlichen Mittel soll dabei die Taktfrequenz nicht von einem Bezugstakt mit feststehender Frequenz abweichen.

In DE-A 41 42 563 (= ITT-Case, C-DIT-1430) ist ein Taktgenerator beschrieben, der mittels eines Phasen/Frequenzmodulators den Systemtakt moduliert. Als Modulator dient ein elektronisch gesteuerter Leckstrompfad, der die VCO-Steuerspannung moduliert, wobei der gesteuerte Leckstrom beispielsweise ein Sägezahn-, Dreiecks-, Sinus- oder anderen Signalverlauf aufweisen kann. Ob eine Phasen- oder Frequenzmodulation vorliegt, hängt von der Dimensionierung der Phasenregelschleife und der Amplitude des Leckstromverlaufs ab.

In DE-A 44 23 074 (= ITT Case, C-DIT-1666) wird zur Reduzierung der taktbedingten Störwirkung das Ausgangssignal eines Taktgenerators mittels eines Frequenzteilers zwischen mindestens zwei Teilungsverhältnissen so umgeschaltet, daß im zeitlichen Mittel ein frequenzgenaues Taktsignal vorliegt. Die Umschaltung des Frequenzteilers erfolgt durch einen Pseudozufallszahlengenerator.

In US-A 4 023 116 wird ein Frequenzsynthese-System beschrieben, dessen Ausgangstakt über eine Phasenregelschleife an einen impulsförmigen Referenztakt gekoppelt ist. Da der Phasenvergleich nur während der Taktflanken des Referenztaktes möglich ist, wirkt sich der Zeitbereich zwischen den Taktflanken auf die Phasen/Frequenzregelung als "Totband" aus. Während des Totbandintervalls ist das Frequenzsynthesesystem ungeregelt und es können daher kleine, ungeregelte Schwankungen in der Ausgangsperiode als störende Phasendifferenzen auftreten. Durch Schaltungsmaßnahmen wird das Totband beseitigt und damit das Frequenzzittern des synthetisierten Ausgangssignals beruhigt.

In US-A 4 933 890 ist ein Takterzeugungssystem beschrieben, bei dem mittels einer binären Zufallszahlenquelle, die in zufälliger Folge zwei Ausgangszustände annimmt, die Flanken eines mittels eines digital gesteuerten Oszillators (=NVO) gebildeten Taktes in der Phase moduliert werden, um den Oberwellengehalt des resultierenden Taktes zu reduzieren.

In EP-A 0 715 408 (= ITT Case: C-DIT-1674) ist ein Takterzeugungssystem beschrieben, bei dem die jeweiligen Taktflanken mittels einer analogen oder diskreten Zufallssignalquelle und einer steuerbaren Verzögerungseinrichtung in der Phase modifiziert sind. Das Ausgangssignal der Zufallssignalquelle ist entweder ein analoges Zufallssignal oder eine Vielzahl von diskreten Zufallswerten, insbesondere eine digitale Pseudozufallszahlenfolge, vergleiche den Oberbegriff des Anspruchs 1.

Bei den beschriebenen Taktgeneratoren werden Verfahren verwendet, die die Hauptspektrallinien des störenden Spektrums reduzieren, indem ihr Energieinhalt auf weitere Spektrallinien verteilt wird. Besonders effektiv sind hierbei diejenigen Verfahren, bei denen die Anzahl der zusätzlichen Spektrallinien möglichst hoch ist, wobei der deterministische Zusammenhang möglichst klein sein soll. Hierfür sind insbesondere diejenigen Verfahren geeignet, die mit Zufallssignalquellen gekoppelt sind. Bei der Frequenz- oder Phasenmodulation des Taktes mittels einer Zufallssignalquelle, wobei es besonders vorteilhaft ist, die Vorder- und Rückflanke unabhängig voneinander in der Phase zu modulieren, ist die Größe des Phasenhubs wichtig. Je größer die zur Phasenmodulation verwendete Rauschbandbreite oder die Anzahl der unterschiedlichen Zufallszahlen wird, desto größer kann der Phasenhub und die zusätzliche Anzahl an Spektrallinien werden. Damit verringern sich in gewünschter Weise die Amplituden des resultierenden Störspektrums. In der praktischen Ausführung stellt sich leider eine Begrenzung hierfür ein, weil durch die zufallsgesteuerte Phasenmodulation des Systemtaktes die zur Verfügung stehende Pulsdauer, Pulspause oder das Puls-Pausenverhältnis mitgeändert wird. Bei hohen Taktfrequenzen kann dabei das durch die jeweilige Schaltungsauslegung und Technologie vorgegebene minimale Puls- und/oder Pausenintervall gelegentlich unterschritten werden, wodurch die Funktionsicherheit der Schaltung nicht mehr gewährleistet ist.

Es ist daher Aufgabe der Erfindung, einen Taktgenerator mit zufallsgesteuerter Phasenmodulation des Systemtaktes zu verbessern, damit er einen störstrahlarmen Systemtakt liefert, der auf möglichst viele Spektrallinien verteilt ist, ohne die Funktionsfähigkeit der taktgesteuerten Schaltung durch einen zu großen Phasenhub einzuschränken. Diese Aufgabe wird erfindungsgemäß mit einem Taktgenerator mit den in Anspruch 1 beanspruchten Merkmalen gelößt. Vorteilhafte Weiterbildungen ergeben sich aus den Merkmalen der Unteransprüche.

Die Erfindung und ihre Weiterbildungen werden nun anhand der Figuren der Zeichnung näher erläutert:

Fig. 1    zeigt als Blockschaltbild einen Taktgenerator nach der Erfindung,

Fig. 2    veranschaulicht schematisch über einige Taktperioden den zeitlichen Zusammenhang zwischen den Taktflanken und den resultierenden Stromspitzen sowie zwischen dem Ursprungs-, Bezugs- und Systemtakt,

Fig. 3 und Fig. 4    zeigen als Blockschaltbilder jeweils einen Taktgenerator mit einem digital gesteuerten Verzögerungsnetzwerk als Phasenmodulator,

Fig. 5 und Fig. 6    zeigen schematisch einige Störsignal-Spektralverteilungen,

Fig. 7    zeigt im Rechteckdiagramm Beispiele für eine analoge Gewichtung und

Fig. 8    zeigt in Tabellenform Beispiele für eine digitale Gewichtung.

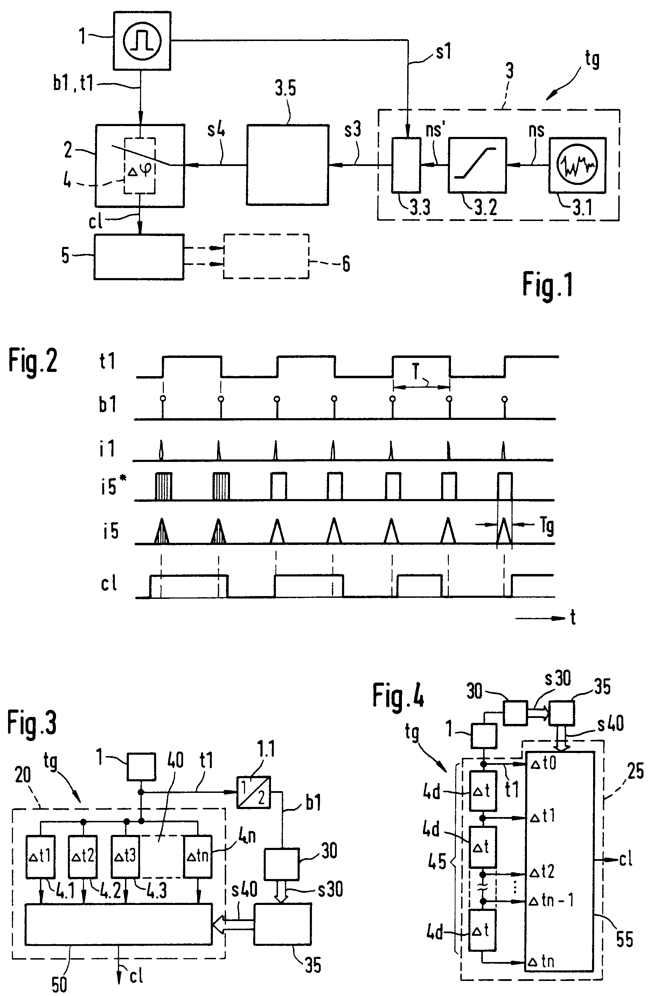

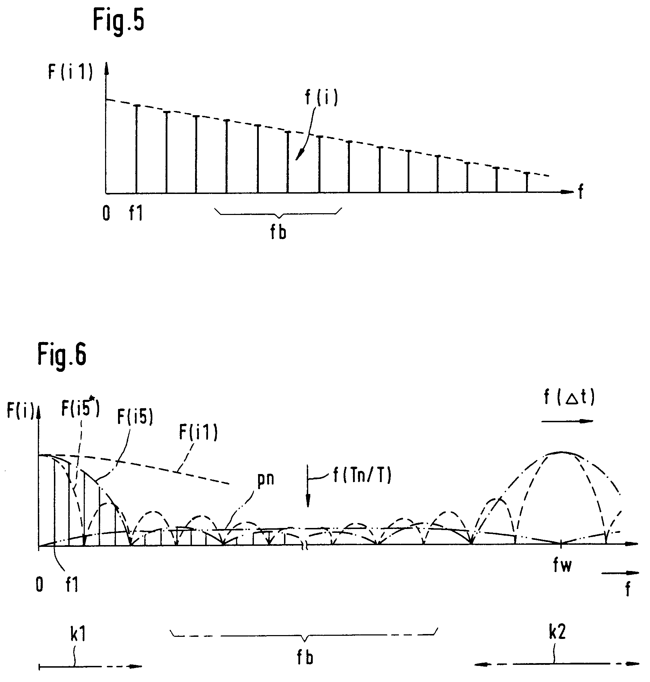

Der Taktgenerator nach Fig. 1 enthält alle Schaltungselemente, die zur Implementierung der Erfindung erforderlich sind. Aus einer über die Fourier- Analyse abgeleiteten Betrachtung der Signalspektren der in Fig. 2 schematisch dargestellten Stromspitzenfolgen i1, i5*, i5 ergeben sich folgende Abhängigkeiten für die resultierenden Spektren. Vereinfachend wird hierbei angenommen, daß die einzelnen Stromspitzen i1, i5*, i5 so schmal sind, daß sich ihre Störspektren bis in einen Frequenzbereich erstrecken, der mindestens um den Faktor 10 größer als die Frequenz des zugehörigen Bezugstaktes b1 ist. Das Spektrum einer in der Frequenz und Phase festen Folge aus schmalen Impulsen, der etwa die Folge der Stromspitzen i1 entspricht, enthält bekanntlich die Harmonischen des Bezugstaktes b1, wobei die einzelnen Amplituden nur geringfügig mit der Frequenz abnehmen (vergl. Fig. 5). Die Spektren phasenmodulierter Impulsfolgen, denen etwa die resultierenden Stromspitzen i5* bzw i5 (vergl. z.B. Fig. 6) entsprechen, verlaufen anders - durch folgende, von den Taktgeneratoren nach Fig. 1, Fig. 3 oder Fig. 4 vorgebbaren Schaltungseigenschaften werden sie beinflußt:

1. Das kleinste gemeinsame Vielfache der inversen Verzögerungszeiten aller auftretenden Verzögerungen $\Delta t$ legt fest, mit welcher Frequenz sich das gesamte Spektrum wiederholt. Ist kein solches gemeinsames Vielfach vorhanden, dann entspricht dies dem Idealfall, bei dem überhaupt keine Wiederholung des Spektrums auftritt. Dieser Betriebsfall ist angenähert nur mit einer Zufallssignalquelle 3.1 erreichbar, deren Ausgangssignal ns ein analoges, aperiodisches Rauschsignal ist, das einen Phasenmodulator 2 mit unendlich feiner Zeitauflösung steuert. Für die praktische Anwendung reicht es jedoch aus, wenn sich das Spektrum erst ab einer ausreichend hohen Frequenz f wiederholt oder gespiegelt wird. Der inverse Wert 1/f dieser Frequenz f liefert einen Zeitwert $\Delta t = 1/f$, der den zugehörigen kleinsten Quantisierungsschritt für alle Phasenverschiebungen darstellt. Dieser Zeitwert $\Delta t$ kann besonders einfach mittels einer geschalteten Verzögerungseinrichtung 40 bzw. 45, z.B. einem Verzögerungsnetzwerk nach Fig. 3 oder Fig. 4, realisiert werden. Liegt $\Delta t$ im Bereich weniger Nanosekunden, so wiederholt sich das Spektrum theoretisch erst nach mehreren hundert Megahertz. In der Regel sind jedoch die Flanken der Stromspitzen hierfür nicht steil genug, so daß das Störspektrum bei diesen Frequenzen nicht mehr vorhanden ist. Der Zeitpunkt $\Delta t$ entspricht nach seiner Normierung auf die Bezugsperiode T der jeweiligen Phasendifferenz $\Delta\varphi$.

2. Das Verhältnis der längsten Verzögerung Tg/2 zur Periodendauer T des Bezugstaktes b1 legt fest, wie stark die Oberwellen im Spektrum gedämpft werden, bis sie letztendlich als diskrete Spektrallinien nicht mehr aus dem gleichförmigen Rauschen herausragen - damit sind sie nicht mehr identifizierbar.

3. Die Länge der Zufallszahlenfolge ohne Wiederholung legt fest, wie dicht die einzelnen Spektrallinien beieinander liegen. Wenn die Zufallszahlenfolge eine definierte Wiederholungsrate aufweist, was in der Regel bei digitalen Zufallssignalgeneratoren der Fall ist, dann handelt es sich um eine Pseudozufallszahlenfolge. Da andererseits die zeitliche Länge Tn der Zufallszahlenwiederholung über die Realisierung des digitalen Zufallszahlengenerators beliebig vorgegeben werden kann, ist auch die Dichte der Spektrallinien beliebig vorgebbar. Wie eingangs erwähnt, hängt von der Anzahl der Spektrallinien ab, auf wieviele Spektrallinien sich die Störenergie verteilen kann. Eine brauchbare Dichte der Spektrallinien beginnt etwa ab einer Feinstruktur, die feiner als ein Zehntel der Bezugstaktperiode T ist.

4. Über eine vorgegebene Gewichtung der vom jeweiligen Rauschsignal ns, s3, s30 abhängigen Verzögerungszeiten $\Delta t$, läßt sich die Umhüllende der Bezugstakt-Oberwellen des verbleibenden Störspektrums beeinflussen, so daß in bestimmten Frequenzbereichen die Störwirkung des Systemtaktes weiter reduziert werden kann. Dafür wird in anderen Frequenzbereichen, die jedoch nicht stören, eine Anhebung des Störspektrums in Kauf genommen.

Folgendes Beispiel soll zur Erläuterung dienen: Ein Taktgenerator erzeugt einen Rechtecktakt mit 5 MHz. Die positive und negative Taktflanke bewirken in den taktgesteuerten Einrichtungen jeweils eine Stromspitze, so daß diese mit einer Frequenz von 10 MHz auftreten. Die Phasenverschiebung erfolgt mittels einer Verzögerungskette, die aus 15 Verzögerungsstufen besteht, die jeweils den Rechtecktakt um 2 ns verzögern. Ein dazu passender Zufallszahlengenerator erzeugt eine Zufallszahlenfolge mit 256 Werten, die sich mit einer Periodendauer Tn= 256T periodisch wiederholen. Die Zufallszahlenfolge kann dabei aus einer Tabelle ausgelesen oder mittels eines Pseudozufallsgenerators erzeugt werden. Das angegebene Beispiel führt zu einer Dichte der Spektrallinien mit einem Abstand von etwa 40 kHz untereinander. Wäre die Zufallszahlenfolge 10 mal so lang, dann würden die einzelnen Spektrallinien nur noch einen Abstand von etwa 4 kHz aufweisen.

Aus diesen Überlegungen folgen die wesentlichen Schaltungsteile der in den Figuren 1, 3 und 4 beschriebenen Taktgeneratoren tg. Jeder Taktgenerator enthält eine Taktquelle 1 zur Erzeugung eines Ursprungtaktes t1, der über die Folge der zugehörigen Schaltflanken einen Bezugstakt b1 definiert. In jedem Taktgenerator tg wird der Ursprungstakt t1 mittels eines von einer Zufallssignalquelle 3.1 bzw. 30 gesteuerten Phasenmodulators 2 bzw. 20 bzw. 25 moduliert, um einen gewünschten Systemtakt cl zu erzeugen. Um die störenden Oberwellen des Systemtaktes cl in den Amplituden mindestens in einem vorgegebenen Frequenzbereich (vergl. in Fig. 6 den Frequenzbereich fb) genügend weit abzusenken, wird das Ausgangssignal der Zufallssignalquelle 3.1 bzw. 30 einer Rauschfärbung unterzogen. Diese Rauschfärbung wird mittels einer Gewichtungseinrichtung 3.5 bzw. 35 erreicht, die der Zufallssignalquellenachgeschaltet ist oder durch die Steuerkennlinie des Phasenmodulators gebildet wird. Durch diese erfinderischen Maßnahmen wird erreicht, daß die taktgesteuerte elektronische Einrichtung 5 über ihre resultierenden Stromspitzen i5 benachbarte elektronische Geräte 6 nicht mehr stören kann.

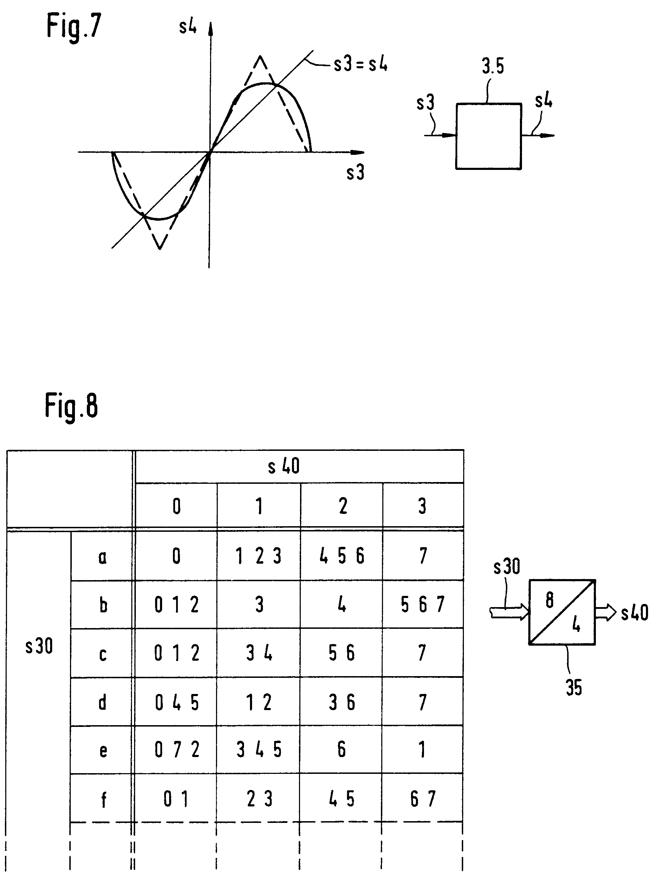

In Fig. 1 enthält der Phasenmodulator 2 eine variable Verzögerungseinrichtung 4, die den Ursprungstakt t1 entsprechend dem Wert eines Steuersignals s4, das zuvor mittels einer analogen Gewichtungseinrichtung 3.5 modifiziert wurde, unterschiedlich verzögert. Die variable Verzögerungseinrichtung 4 kann z.B. eine analoge Laufzeitkette aus hintereinandergeschalteten Invertern sein, deren Verzögerungszeit von dem Steuersignal s4 abhängig ist. Damit sich das Steuersignal s4 während der Bezugstaktperiode T nicht ändert, wird es durch eine Abtasthalteschaltung 3.3 festgehalten. Das zugehörige Steuersignal s1 ist entweder der Ursprungstakt t1 oder ein verkoppeltes Signal aus der Taktquelle 1. Die Zufallssignalquelle 3.1 in der Signalquelle 3 liefert am Ausgang als Zufallssignal ein Rauschsignal ns, dessen Amplituden mittels eines Begrenzers 3.2 begrenzt werden. Sein Ausgangssignal ist ein gefiltertes Rauschsignal ns', das dem Eingang der Abtasthalteschaltung 3.3 zugeführt ist. Ihr Ausgangssignal s3, ein ungefärbtes Rauschsignal, ist dann dem Eingang der analogen Gewichtungseinrichtung 3.5 zugeführt, die entsprechend ihrer Kennlinie (vergl. z.B. Fig.7) das Rauschsignal s3 als Rauschsignal s4 modifiziert.

Der Begrenzer 3.2 ist erforderlich, wenn der Zufallssignalquelle 3.1 nicht von sich aus in ihrer Ausgangsamplitude begrenzt ist, weil ein unbegrenztes Rauschsignal bei den Systemtaktflanken zu große Phasendifferenzen erzeugen könnte. Aus der eingangs genannten zweiten Bedingung ergibt sich nämlich, daß das Verhältnis der längsten Verzögerungszeit Tg/2 in einem bestimmten Verhältnis zur Periode T des Bezugstaktes b1 stehen muß, weil dadurch festgelegt wird, wie stark die Oberwellen des Bezugstaktes b1 gedämpft werden. Aus dieser Überlegung folgt, daß der Maximalwert Tg/2 der Phasendifferenz einen bestimmten Wert der Periode T des Bezugstaktes b1 nicht überschreiten darf. Dieser Wert liegt in der Regel zwischen 2 und 20 % der Periode T, sollte auf jeden Fall aber T/2 nicht überschreiten. In Fig. 3 und Fig. 4 ist eine variable Verzögerungseinrichtung 45 bzw. 40 aus einzelnen, digital gesteuerten Verzögerungsstufen 4d bzw. 4.1, 4.3, ..., 4.n mit gleichen oder ungleichen Verzögerungszeiten $\Delta t$ bzw. $\Delta t1$, $\Delta t2$, .... $\Delta tn$, die aber auf jeden Fall fest sind, als Schaltbild dargestellt. Jede Verzögerungsstufe kann dabei durch eine eigene Laufzeitkette realisiert sein. Der Begrenzer 3.2 kann über eine entsprechende Kennlinie ebenfalls die Rauschfärbung bewirken.

Fig. 2 zeigt schematisch für einige Perioden T den zeitlichen Verlauf einiger Signale. In der ersten Zeile ist der rechteckförmige Ursprungstakt t1 aus der Taktquelle 1 dargestellt. Ohne die Phasenmodulation der Taktflanken ergäbe sich für die Folge der resultierenden Stromspitzen i1 ein Bezugstakt b1 mit der doppelten Frequenz des Ursprungtaktes t1. Die Phasenmodulation der Taktflanken entspricht einem Zeitfenster Tg in jeder Bezugstaktperiode T synchron zum Bezugstakt b1. Innerhalb des Zeitfensters Tg können die Stromspitzen i5* bzw. i5 2 zu beliebigen oder diskreten Zeitpunkten auftreten. Der halbe Wert des Zeitfensters Tg entspricht dabei der maximalen Phasendifferenz des Systemtaktes cl gegenüber dem Bezugstakt b1. Die zeitliche Dauer der Stromspitzen wird durch die Phasenmodulation nicht verändert. Bei gleichförmigem, also nichtgewichtetem Zufallsignal s3, s30 sind innerhalb des Zeitfensters alle Phasenzustände gleichförmig vertreten, vergleiche im vierten Zeitdiagramm i5* in Fig. 2 die rechteckförmige Umhüllende der resultierenden Stromspitzen. Nach der Erfindung werden die Störsignale in vorgegebenen Frequenzbereichen weiter abgesenkt, weil die der Phasenmodulation dienenden Rauschsignale s4 bzw. s40 nicht gleichförmig zur Wirkung kommen, sondern gewichtet werden. Der Verlauf der Gewichtung hängt von den Anforderungen an den Frequenzbereich ab, der weniger gestört werden soll. Als Beispiel zeigt in Fig. 2 das fünfte Zeitdiagramm i5 als Umhüllende der Stromspitzen einen dreiecksförmigen Verlauf in jedem Zeitfenster Tg. Der dreiecksförmige Verlauf soll die Häufigkeit der Stromspitzen i5 bei der jeweiligen Frequenz darstellen, die jeweilige Höhe der Stromspitzen ist selbstverständlich gleichbleibend. Schließlich sind in Fig. 2 als letztes Zeitdiagramm cl einige Perioden T des Systemtaktes cl dargestellt, wobei die Vorder- und Rückflanke des Rechtecksignals gegenüber dem Ursprungstakt t1 in der Phase unabhängig voneinander modifiziert sind.

In Figur 3 erzeugt der Phasenmodulator 20 quantisierte Phasendifferenzen $\Delta t1$, $\Delta t2$, ..., $\Delta tn$, deren Feinstruktur vom kleinsten Quantisierungsschritt der möglichen Phasendifferenzen abhängig ist. Der Phasenmodulator 20 arbeitet damit gleichsam digital, denn er kann nur eine bestimmte Anzahl von Phasendifferenzen erzeugen, die sich untereinander durch die jeweilige Anzahl der Phasendifferenzschritte $\Delta t$ unterscheiden. Der Phasendifferenzschritt $\Delta t$ kann beispielsweise durch die Signallaufzeit einer einzigen, oder um die Signalinvertierung zu vermeiden, einer doppelten Inverterstufe gebildet sein, die Teil einer Laufzeitkette aus hintereinandergeschalteten Inverterstufen sind. Bekanntlich kann die Laufzeit derartiger Inverterstufen über den Querstrom in einem weiten Bereich eingestellt werden, wobei mittels einer Regelschaltung herstellungs- oder temperaturbedingte Laufzeitabweichungen ausgeregelt werden können. Die Auswahl der jeweiligen Verzögerungszeit erfolgt mittels einer digital gesteuerten Schalteinrichtung 50, deren Signaleingänge mit jeweils einer Verzögerungsstufe 4.1, 4.2, 4.3, ..., 4.n verbunden sind. Durch ein digitales Steuersignal s40 aus einer digitalen Gewichtungseinrichtung 35, die mit dem Ausgang einer digitalen Zufallssignalquelle 30 gekoppelt ist, wird jeweils einer der Eingänge der Schalteinrichtung 50 auf den Ausgang durchgeschaltet und gibt dort als Ausgangssignal den Systemtakt cl ab. Das digitale Eingangssignal s30 der Gewichtungseinrichtung 35 sind digitale Zufallszahlenwerte aus der Zufallssignalquelle 30 gebildet. Bei den Zufallszahlenwerten handelt es sich in der Regel um eine Pseudozufallszahlenfolge aus einem Pseudozufallszahlengenerator, der beispielsweise in den bereits genannten DE-A 44 23 074 oder EP-A 0 715 408 erwähnt ist. Es ist aber auch möglich, daß die Pseudozufahlszahlenfolge als Tabelle gespeichert ist, die von dem Zufallszahlengenerator 30 ausgelesen wird. Die Wiederholungsrate der Pseudozufallszahlenfolge ist durch die Länge der Tabelle oder die Anzahl der Schieberegisterstufen im Pseudozufallszahlengenerator beliebig vorgebbar. In Fig. 3 erfolgt die Ansteuerung des Zufallszahlengenerators 30 über den Ursprungstakt t1, der mittels einer Taktverdopplungsschaltung 1.1 verdoppelt wird und mit diesem Takt, dem Bezugstakt b1, den Zufallszahlengenerator 30 steuert.

Die digitale Gewichtungseinrichtung 35 ist beispielsweise als ein logischer Zuordner ausgebildet, der einem Eingangszahlenwert einen Ausgangszahlenwert zuordnet. Dabei können auch verschiedene, nicht nebeneinander liegende Eingangszahlen zu einer einzigen Ausgangszahl zusammengefaßt werden. In Fig. 8 sind zur Verdeutlichung einige Beispiele in Tabellenform angegeben, wie z.B. acht Eingangszahlen s30 zu vier Ausgangszahlen s40 zusammengefaßt werden können. Derartige Tabellen lassen sich elektronisch in Speichern leicht realisieren, wobei der Zahlenumfang der Ein- und Ausgangswerte s30, s40 der Gewichtungseinrichtung bei der Implementierung des Taktgenerators nach der Erfindung erheblich größer als bei dem Beispiel von Fig. 8 ist. Die digitale Realisierung der Gewichtungseinrichtung 35 ermöglicht über die beliebig vorgebbare Gewichtung der ursprünglich gleichförmigen Rauschsignale s30 ganz andere Rauschfärbungen als die analoge Gewichtungseinrichtung 3.5, bei der die Steuerkennlinie einen kontinuierlichen Verlauf hat. Selbstverständlich kann in der Gewichtungseinrichtung 35 die Gewichtung auch so erfolgen, daß jeder Eingangswert in seiner Größe über eine Tabelle oder eine Multipliziereinrichtung verändert wird. Auch sind Kombinationen aus Multiplikation und Wertezusammenfassung möglich. Die Wertezusammenfassung entspricht dabei einer Multiplikation, wobei der Gewichtungsfaktor etwa durch das Verhältnis der jeweils zusammengefaßten Zahlen bestimmt ist. Werden beispielsweise von n Eingangswerten s30 die Einzelwerte "5", "6" und "7" zu einem einzigen Ausgangswert "4" von m Ausgangswerten s40 zusammengefaßt, dann entspricht dies etwa einer Gewichtung mit dem Faktor 3, sofern n etwa gleich groß wie m ist. Eine gleichförmige Komprimierung einer gleichgewichteten Zufallszahlenfolge liefert nämlich wieder eine gleichgewichtete Zufallszahlenfolge, deren Umfang jedoch reduziert ist. In Fig. 8 ist in der Tabelle, Zeile f) hierzu ein Beispiel dargestellt, bei dem der Zahlenumfang ohne Gewichtungsänderung reduziert ist, vergl. in Fig. 8, Zeile f) der Tabelle.

In Fig. 4 ist ein Taktgenerator tg nach der Erfindung dargestellt, dessen Verzögerungsnetzwerk 45 besonders einfach zu realisieren ist. Es besteht aus der Hintereinanderschaltung einer vorgegebenen Anzahl von Verzögerungsstufen 4d mit insbesondere gleichen Verzögerungszeiten $\Delta t$. Zwischen jeweils zwei Verzögerungsstufen befindet sich ein Signalabgriff, der mit jeweils einem Eingang einer elektronischen Schalteinrichtung 55 verbunden ist. Der Anfang und das Ende der Verzögerungskette sind ebenfalls mit Eingängen der Schalteinrichtung 55 verbunden. Jede Verzögerungsstufe 4d enthält eine gerade Anzahl von hintereinandergeschalteten Invertern, insbesondere zwei, wobei durch die gerade Anzahl eine Invertierung des Taktsignals verhindert werden soll. Die Ausbildung der Verzögerungseinrichtung als Inverterkette ist für die Schaltungsauslegung auf dem Halbleiterkristall besonders zweckmäßig, weil es sich bei den Verzögerungsstufen 4d um flächengleiche Schaltungsstrukturen handelt, die bequem in einem Block angeordnet werden können. Die einzelnen Transistoren der Schalteinrichtung 55 können dabei mit kurzen Signalleitungen an die Signalabgriffe der Verzögerungskette angeschlossen werden. Eine relativ kompakte Anordnung der Verzögerungseinrichtungen 4 bzw. 40 bzw. 45 auf der Halbleiteroberfläche ist wichtig, damit die zeitliche Auflösung des Systemtaktes cl nur von dem jeweiligen Signalabgriff und nicht von eingekoppelten Störsignalflanken abhängig ist. Die kleinsten Quantisierungsschritte und damit die Feinstruktur der Phasendifferenzen $\Delta t$ bzw. $\Delta \varphi$ muß sehr klein gegenüber der Periode T des Bezugstaktes b1 sein. Für die Lösung der gestellten Aufgabe ist es ferner erforderlich, daß die Phasenverschiebung nur der Zufallszahl und nicht einem eingestreuten Signal folgt, das dann im Störspektrum wieder als hervorgehobenes Signal auftreten würde. Durch Auslassung einiger Signalabgriffe oder durch unterschiedliche Widerstandswerte 4d können auf einfache Weise gewichtete Verzögerungszeiten gebildet werden. In diesem Fall kann die Gewichtungseinrichtung 35 zwischen dem Zufallszahlengenerator 30 und der Schalteinrichtung 55 entfallen. Ein ähnliche Gewichtung ist mit dem Widerstandsnetzwerk 40 von Fig. 3 möglich, wenn die Stufung der einzelnen Widerstände 4.n nicht mehr linear sondern in der gewünschten Gewichtungsform erfolgt.

In Fig. 5 ist das Spektrum F(i1) der in der Frequenz und in der Phase festen Stromspitzen i1 schematisch dargestellt. Es enthält diskrete Spektrallinien, die mit der Frequenz f1 des Bezugstaktes b1 beginnen und sich über eine Vielzahl von Frequenzvielfachwerte von f1 erstrecken. Die Amplituden der Spektrallinien nehmen dabei mit steigender Frequenz ab. Dies hängt nach Fourier bekanntlich von dem Puls-Pausenverhältnis und der Steilheit der Stromspitzen i1 ab. Diese Abhängigkeit ist schematisch als Pfeil f(i) dargestellt, der die Absenkung beeinflußt. In einem angenommenen Frequenzbereich fb sind die Amplituden der Spektralkomponenten noch relativ groß, so daß ein anderes elektronisches Gerät, das in diesem Frequenzbereich Störsignale aufnehmen könnte, unzulässig gestört würde.

In Fig. 6 sind schematisch die Störspektren F(i) der resultierenden Stromspitzen i1, i5*, i5 der oben beschriebenen Taktfolgen dargestellt, um die Wirkung der der Erfindung zu verdeutlichen. Bei den dargestellten Spektren handelt es sich genau genommen nur um die Darstellung der Umhüllenden der ganzzahligen Frequenzvielfachwerte n×f1 des Bezugstaktes b1. Die Amplituden dieser Oberwellen treten aus dem allgemeinen Störnebel pn teilweise erheblich heraus und stören dann. Der besseren Übersicht wegen sind in Fig. 6 nur einige Störamplituden bei den Frequenzfvielfachwerten n×f1 eingezeichnet. Dargestellt sind die Umhüllenden der der folgenden Spektren:

F(i1) zeigt das Spektrum der Stromspitzen i1 eines Systemtaktes cl ohne Phasenmodulation,

F(i5*) zeigt das Spektrum der Stromspitzen i5* eines Systemtaktes cl mit zufallsgesteuerter Phasenmodulation und

F(i5) zeigt das Spektrum der Stromspitzen i5 eines Systemtaktes cl mit zufallsgesteuerter Phasenmodulation und mit gewichteten Zufallssignalen.

Im Frequenzbereich k1 fällt auf, daß die Absenkung der Amplituden von F(i5) und F(i5*) deutlich größer ist als die Absenkung der Amplituden von F(i1). Für niedrige Frequenzvielfachwerte n×f1 des Bezugstaktes b1 ist im Beispiel von Fig. 6 die Amplitudenabsenkung ohne Gewichtung größer als mit Gewichtung - bei einer anderen Gewichtung kann das anders sein. Bei der dritten Oberwelle hat F(i5*) z.B. eine Nullstelle; die Amplituden von F(i5) sind hier zwar auch niedriger geworden, ihr Wert ist jedoch keinesfalls vernachlässigbar. Erst bei der sechsten Oberwelle 6×f1 des Bezugstaktes b1 hat F(i5) eine erste Nullstelle; dort hat das Spektrum F(i5*) jedoch bereits seine zweite Nullstelle. Im darüberliegenden Frequenzbereich fb liegen die Amplituden von F(i5) nahezu immer unterhalb der Amplituden des Spektrums F(i5*) oder gehen im allgemeinen Rauschpegel pn unter. Die Wahl der Nullstellen von F(i5) ergibt sich aus der jeweiligen Gewichtungsfunktion der Rauschsignale s4, s40 und ist daher vorgebbar. Im Beispiel von Fig. 6 ist die Gewichtungsfunktion bei F(i5) dreiecksförmig (vergl. die dreiecksförmige Umhüllende der Impulsfolge I5 in Fig. 2), während bei F(i5*) die Gewichtung gleichförmig ist (vergl. die rechteckförmige Umhüllende der Impulsfolge i5* in Fig. 2). Durch die Vorgabe der dreiecksförmigen Gewichtung fallen in Fig. 6 alle geradzahligen Nullstellen des Spektrums F(i5*) mit den Nullstellen des Spektrums F(i5) zusammen. Der störungsfreie Frequenzbereich fb, bei dem die Amplituden im allgemeinen Rauschen pn untergehen, ist beim Spektrum F(i5) deutlich größer als beim Spektrum F(i5*) oder gar F(i1).

Im Frequenzbereich k2 wiederholt sich bei der Frequenz fw das Spektrum des Frequenzbereichs k1, wobei es sich symmetrisch zu höheren und tieferen Frequenzen erstreckt. Die Lage dieser Frequenz fw hängt, wie in Punkt 1 erörtert, von dem kleinsten gemeinsamen Vielfachen der inversen Verzögerungszeiten, also von dem kleinsten Verzögerungsschritt Δt ab. Diese Frequenz fw und damit der gesamte Frequenzbereich k2 sollen so hoch liegen, daß der kritische Frequenzbereich fb nicht mehr gestört wird. Die Absenkung der Oberwellen in den Frequenzbereichen k1, k2 und fb hängt entsprechend den Punkten 2 und 4 der eingangs genannten Abhängigkeiten vom Verhältnis der längsten Verzögerungszeit Tg/2 zur Periodendauer T des Bezugstaktes b1 sowie von der gewählten Gewichtungsfunktion, mit der die Zufallssignale s3, s30 modifiziert werden, ab.

Durch die zufallsgesteuerte Phasenmodulation wird die gesamte Energie des störenden Spektrums auf eine Vielzahl von Frequenzen aufgeteilt, wobei nach der Erfindung die Aufteilung durch die beschriebene Gewichtung zusätzlich so gesteuert ist, daß in dem gewünschten Frequenzbereich fb die verbleibenden Oberwellen des Systemtaktes auf Kosten anderer Frequenzbereiche k1, k2 in ihrer Amplitude noch weiter abgesenkt werden. Die Oberwellen der mit der Vielzahl der unterschiedlichen Taktphasen korrelierten Signalkomponenten liefern dabei einen Beitrag zum stets vorhandenen etwa gleichförmigen Rauschpegel pn, dessen Umhüllende in Fig. 6 schematisch als Strich-Punkt-Punkt-Linie pn dargestellt ist. Je dichter die einzelnen Spektrallinien liegen, desto niedriger ist ihr jeweilige Beitrag zum Rauschpegel pn, weil sich die Energie auf mehr Spektralkomponenten aufteilen kann. Für die Dichte der Spektrallinien ist entsprechend dem eingangs erwähnten Punkt 3 die Anzahl der Zufallszahlen s40 im Zeitintervall Tn im Verhältnis zur Anzahl an Zufallszahlen während einer Periode T des Bezugstaktes b1 verantwortlich. Die Wiederholungsrate der Pseudozufallszahlenfolge s40 bestimmt somit die Anzahl der Spektrallinien im Frequenzbereich 0 bis fw, und damit ihre Dichte. Je länger die vorbestimmte Folge der Pseudozufallszahlen ist, desto mehr Spektrallinien stehen zuf Verfügung, desto aufwendiger wird aber auch der Pseudozufallszahlengeber, die Gewichtungseinrichtung und der Phasenmodulator mit Schalteinrichtung.

Über eine rechnerische Simulation lassen sich die beschiebenen Parameter des Taktgenerators tg bzw. des Systemtaktes cl leicht variieren und ihr Einfluß auf das Signalspektrum F(i5) untersuchen. Es lassen sich dabei optimale Parameter finden, die den gewünschten Entstöreffekt bringen. Die Übereinstimmung zwischen der tatsächlichen Entstörwirkung und der Simulation ist sehr hoch. Es wird darauf hingewiesen, daß sich einzelne Schaltungsteile des Taktgenerators tg auch mittels schneller Prozessoren und entsprechenden Programmen realisieren lassen.

In Fig. 7 sind als Beispiel in Rechteckkoordinaten s3, s4 zwei unterschiedliche, punktsymmetrische Steuerkennlinien einer analogen Gewichtungseinrichtung 3.5 dargestellt. Die eine hat einen dreiecksförmigen, die andere einen sinusförmigen Verlauf. In beiden Fällen werden mittlere Rauschsignale verstärkt und die dazu außerhalb liegenden Rauschsignale abgeschwächt. Die Diagonale zeigt die Gleichgewichtung mit s3 = s4. Andere Steuerkennlinien, die spiegelbildlich oder unsymmetrisch sind, sind ebenfalls möglich.

In Fig. 8 ist in Tabellenform eine digitale Gewichtungseinrichtung 35 dargestellt, die einem digitalen Eingangssignal s30 ein digitales Ausgangssignal s40 zuordnet. Dabei umfaßt das Eingangssignal s30 als Beispiel acht und das Ausgangssignal s40 vier Zahlenwerte. Die Gewichtung erfolgt nun dadurch, daß einem Ausgangswert s40 ein bis drei Eingangszahlenwerte zugeordnet werden, wobei die Zuordnung nicht auf benachbarte Zahlenwerte beschränkt ist, vergl. die Beispiele in den Zeilen a) bis e). Keine Gewichtung des jeweiligen Ausgangswertes liegt vor, wenn er von zwei Eingangswerten aus erreicht werden kann - der Gewichtungsfaktor ist hier 8/8. Wird er von drei Eingangswerten aus erreicht, dann beträgt der Gewichtungsfaktor 12/8. Wird er nur von einem Eingangswert aus erreicht, dann liegt eine Abschwächung vor, der Gewichtungsfaktor ist 4/8. Die Normierung ist hierbei auf den einzelnen Zahlenwert des Ausgangssignals s40 bezogen. Wenn die Normierung auf den Zahlenumfang s40 erfolgt, dann ist jeder der Faktoren mit 1/4 zu multiplizieren. Da es sich bei den Zahlen s30 um Zufallszahlen handelt, ist es für die Gewichtung gleichgültig welche Zahlen zusammengefaßt werden, z.B. erzeugen die Zeilen b) bis e) die gleiche Gewichtung 12/8 für die Zahl "0". Zeile f) stellt ein Beispiel für gleichbleibende Gewichtung dar.

**Patentansprüche**

1.  Taktgenerator (tg) zur Erzeugung eines im zeitlichen Mittel frequenzgenauen Systemtaktes (cl) für eine taktgesteuerte elektronische Einrichtung (5), der bezüglich benachbarter elektronischer Geräte (6), insbesondere im Kraftfahrzeug, störstrahlarm ist, wobei:

    -   mittels einer Zufallssignalquelle (3.1, 30) und eines Phasenmodulators (2; 20; 25) ein Systemtakt (cl), insbesondere über dessen Vorder- und/oder Rückflanke, gegenüber einem in der Phase und Frequenz stabilen Bezugstakt (b1) moduliert ist,

    -   der maximale Phasenhub ($\Delta\varphi$ bzw. $\Delta t$) auf einen Wert begrenzt ist, der kleiner als der halbe Wert einer Periode (T) des Bezugstaktes ist, und

    -   die Zufallssignalquelle (3.1, 30) als Ausgangssignal entweder

        -- ein analoges Ausgangssignal (s3) erzeugt, wodurch die statistische Verteilung der resultierenden Phasendifferenzen ($\Delta\varphi$) kontinuierlich ist,
        -- oder ein diskretes, insbesondere digitales Ausgangssignal (s30) erzeugt, dessen Auflösung über die Größe der Quantisierungsschritte so fein vorgegeben ist, daß die resultierenden Phasendifferenzen ($\Delta\varphi$) eine Feinstruktur aufweisen, die kleiner als ein Zehntel der Periode (T) des Bezugstaktes (b1) ist,

        <u>dadurch gekennzeichnet,</u>

    -   daß das Ausgangssignal (s3; s30) der Zufallssignalquelle (3.1, 30) mittels einer Gewichtungseinrichtung (3.5; 35; 20; 25) im Rauschinhalt gefärbt ist.

2.  Taktgenerator (tg) nach Anspruch 1, dadurch gekennzeichnet, daß die Zufallssignalquelle (30) ein periodisches, digitales Ausgangssignal (s30) erzeugt, das auch als Pseudozufallssignal bezeichnet wird, wobei die Periode (Tn) der Pseudozufallszahlenfolge größer als der zehnfache Wert der Periode (T) des Bezugstaktes (b1) ist.

3.  Taktgenerator (tg) nach Anspruch 1 oder 2, dadurch gekennzeichnet, daß der Phasenmodulator (2; 20; 25) eine variable Verzögerungseinrichtung (4; 40; 45) enthält, deren Steuereingang über die Gewichtungseinrichtung (3.5) mit dem Ausgang der Zufallssignalquelle (3.1) verkoppelt ist.

4.  Taktgenerator (tg) nach Anspruch 3, dadurch gekennzeichnet, daß der Phasenmodulator (25; 20) ein mit Signalabgriffen versehenes Verzögerungsnetzwerk (45; 40) mit Verzögerungsstufen (4d bzw 4.1, 4.2, 4.3, 4.n) mit gleichen und/oder ungleichen Verzögerungszeiten ($\Delta t$ bzw. $\Delta t1$, $\Delta t2$, $\Delta t3$, ... $\Delta tn$) und eine mit den Signalabgriffen verbundene Schalteinrichtung (55 bzw. 50) enthält und daß durch die gewichteten Zufallszahlenwerte (s40) die jeweilige Schaltposition und damit die momentane Verzögerungszeit ($\Delta ti$) des Verzögerungsnetzwerkes (45; 40) gesteuert ist.

5.  Taktgenerator nach Anspruche 4, dadurch gekennzeichnet, daß die Gewichtungseinrichtung (35) durch die Verzögerungszeiten des Verzögerungsnetzwerkes (45; 40) realisiert ist.

6.  Taktgenerator nach Anspruch 1, dadurch gekennzeichnet, daß die Gewichtungseinrichtung (3.5) durch die Kennlinie eines Begrenzers (3.2) realisiert ist, der der Zufallssignalquelle (3.1) nachgeschaltet ist.

Fig.1

Fig.2

Fig.3

Fig.4

## Fig.5

F(i 1)

f(i)

0  f1

fb

f

## Fig.6

F(i)  F(i5')  F(i5)  F(i1)

f(△t)

pn

f(Tn/T)

0  f1

fw

f

k1

fb

k2

## Fig.7

## Fig.8

| | | s40 | | | |
|---|---|---|---|---|---|
| | | 0 | 1 | 2 | 3 |
| s30 | a | 0 | 1 2 3 | 4 5 6 | 7 |
| | b | 0 1 2 | 3 | 4 | 5 6 7 |
| | c | 0 1 2 | 3 4 | 5 6 | 7 |
| | d | 0 4 5 | 1 2 | 3 6 | 7 |
| | e | 0 7 2 | 3 4 5 | 6 | 1 |
| | f | 0 1 | 2 3 | 4 5 | 6 7 |

<table>
<tr><td colspan="3" align="center"></td><td align="right"><strong>Nummer der Anmeldung</strong></td></tr>
</table>

| | **Europäisches** | **EUROPÄISCHER RECHERCHENBERICHT** | **Nummer der Anmeldung** |
| | **Patentamt** | | EP 96 11 4131 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | EP 0 715 408 A (ITT IND GMBH DEUTSCHE) 5.Juni 1996<br>* Spalte 3, Zeile 37 - Spalte 6, Zeile 2; Abbildungen 1-3,6 *<br>--- | 1-6 | H04B15/04 |
| A | EP 0 163 313 A (TEKTRONIX INC) 4.Dezember 1985<br>* Zusammenfassung; Abbildung 1 *<br>----- | 1,6 | |
| | | | **RECHERCHIERTE SACHGEBIETE (Int.Cl.6)**<br><br>H04B |

Der vorliegende Recherchenbericht wurde für alle Patentansprüche erstellt

| Recherchenort | Abschlußdatum der Recherche | Prüfer |
|---|---|---|
| DEN HAAG | 27.Januar 1997 | Andersen, J.G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPO FORM 1503 03.82 (P04C03)